# EUROPEAN PATENT APPLICATION

(11) **EP 4 412 348 A1**
(43) Date of publication of application: **07.08.2024**
(21) Application number: 21959449.6
(22) Date of filing: 30.09.2021
(51) Int. Cl.: H04W 72/04, H04W 72/12, H04W 28/04

(54) **TERMINAL AND WIRELESS COMMUNICATION METHOD**

(71) Applicant: NTT DOCOMO, INC., Tokyo 100-6150 (JP)
(72) Inventor: YOSHIOKA, Shohei, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2021/036313
(87) International publication number: WO 2023/053414

(57) **Abstract**

A terminal includes a reception unit that receives data via a downlink channel in data distribution for a plurality of terminals, a transmission unit that transmits feedback on the data, and a control unit that controls the feedback, in which the feedback includes a first feedback in a mode for transmitting a negative response without transmitting an affirmative response, and when a first uplink channel related to the first feedback temporally overlaps with a second uplink channel different from the first uplink channel, the control unit determines a processing method of the first uplink channel and the second uplink channel in accordance with a handling method related to the first feedback.

## Description

### TECHNICAL FIELD

The present disclosure relates to a terminal and a radio communication method corresponding to a multicast/broadcast service.

### BACKGROUND ART

The 3rd Generation Partnership Project (3GPP) has prepared a specification for the 5th generation mobile communication system (which may be called 5G, New Radio (NR), or Next Generation (NG)), and is also in the process of specifying the next generation called Beyond 5G, 5G Evolution or 6G.

Release 17 of the 3GPP covers simultaneous data transmission (which may be referred to as distribution) services (tentatively called Multicast and Broadcast Services (MBS)) to specified or unspecified terminals (User Equipment, UE) in NR (Non-Patent Literature 1).

The MBS supports, for example, a first mode (NACK-only feedback) for transmitting a negative response (NACK) without transmitting an affirmative response (ACK) and a second mode (ACK/NACK feedback) for transmitting both an affirmative response (ACK) and a negative response (NACK) as a mode (HARQ feedback) for transmitting feedback on data received by the UE.

### CITATION LIST

### NON-PATENT LITERATURE

[Non-Patent Literature 1] "New Work Item on NR support of Multicast and Broadcast Services," RP-193248, 3GPP TSG RAN Meeting #86, 3GPP, December 2019

### SUMMARY OF THE INVENTION

Now, when two or more NACK-only feedbacks can be obtained in one slot in which a PUCCH is scheduled, several handling methods are considered for handling two or more NACK-only feedbacks. Furthermore, when PUCCH related to the NACK-only feedback temporally overlaps with other uplink channels (PUCCH or PUSCH), a multiplexing method between PUCCH related to the NACK-only feedback and other uplink channels are also considered.

Against this background, the inventors, as a result of careful examination, found it necessary to clarify the operation of the UE by considering the handling method of the NACK-only feedback in the case that the PUCCH related to the NACK-only feedback temporally overlaps with other uplink channels.

Therefore, the present invention is made in view of this situation, and it is an object of the present invention to provide a terminal and a radio communication method which can clarify the operation by considering the handling method of the NACK-only feedback in the case that PUCCH related to the NACK-only feedback temporally overlaps with other uplink channels.

One aspect of the disclosure is a terminal including a reception unit that receives data via a downlink channel in data distribution for a plurality of terminals, a transmission unit that transmits feedback on the data, and a control unit that controls the feedback, in which the feedback includes first feedback in a mode for transmitting a negative response without transmitting an affirmative response, and the control unit determines a processing method of the first uplink channel and the second uplink channel in accordance with a handling method related to the first feedback when a first uplink channel related to the first feedback temporally overlaps with a second uplink channel different from the first uplink channel.

One aspect of the disclosure is a radio communication method including a step A of receiving data via a downlink channel in data distribution for a plurality of terminals and a step B of transmitting feedback on the data, the feedback including first feedback in a mode for transmitting a negative response without transmitting an affirmative response, and a step C of determining a processing method of the first uplink channel and the second uplink channel in accordance with a handling method related to the first feedback when the first uplink channel related to the first feedback temporally overlaps with a second uplink channel different from the first uplink channel.

### BRIEF DESCRIPTION OF THE DRAWINGS

[FIG. 1] FIG. 1 is an overall schematic configuration diagram of a radio communication system 10.
[FIG. 2] FIG. 2 is a diagram showing a frequency range used in the radio communication system 10.
[FIG. 3] FIG. 3 is a diagram showing a configuration example of a radio frame, a sub-frame and a slot used in the radio communication system 10.
[FIG. 4] FIG. 4 is a functional block configuration diagram of a UE 200.
[FIG. 5] FIG. 5 is a functional block configuration diagram of a gNB 100.
[FIG. 6] FIG. 6 is a diagram showing a configuration example of PTM transmission mode 1 and PTM transmission mode 2.
[FIG. 7] FIG. 7 is a diagram for explaining problems.
[FIG. 8] FIG. 8 is a diagram for explaining an operation example.
[FIG. 9] FIG. 9 is a diagram for explaining an operation example.
[FIG. 10] FIG. 10 is a diagram for explaining an operation example.
[FIG. 11] FIG. 11 is a diagram for explaining an operation example.
[FIG. 12] FIG. 12 is a diagram for explaining an operation example.
[FIG. 13] FIG. 13 is a diagram for explaining an operation example.
[14 FIG.] FIG. 14 is a diagram for explaining an operation example.
[FIG. 15] FIG.15 is a diagram showing an example of a hardware configuration of a gNB 100 and a UE 200.
[FIG. 16] FIG.16 is a diagram showing an example of a structure of a vehicle 2001.

### DESCRIPTION OF EMBODIMENTS

Hereinafter, the embodiment will be described based on the drawings. The same functions and structures will be denoted by the same or similar reference numerals, and the descriptions thereof will be omitted accordingly.

### [Embodiments]

### (1) Overall schematic configuration of radio communication system

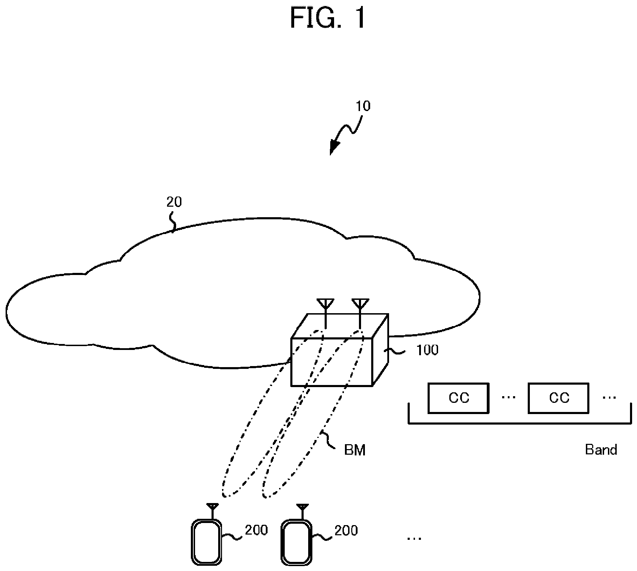

FIG. 1 is an overall schematic configuration of a radio communication system 10 according to an embodiment. The radio communication system 10 is a radio communication system according to 5G New Radio (NR) and includes a Next Generation-Radio Access Network 20 (hereinafter referred to as NG-RAN 20 and a terminal 200 (UE (User Equipment) 200).

The radio communication system 10 may be a radio communication system according to a system called Beyond 5G, 5G Evolution or 6G.

The NG-RAN 20 includes a base station 100 (hereafter referred to as gNB 100). The specific structure of the radio communication system 10 including the number of the gNB 100 and the UE 200 is not limited to the example shown in FIG. 1.

The NG-RAN 20 practically includes a plurality of NG-RAN Nodes, specifically, gNBs (or ng-eNBs), and is connected to a core network (5GC, not shown) according to 5G. It should be noted that the NG-RAN 20 and the 5GC may be simply described as "network."

The gNB 100 is a radio base station in accordance with 5G, and executes radio communication in accordance with the UE 200 and 5G. The gNB 100 and the UE 200 can support Massive MIMO (Multiple-Input Multiple-Output), which generates a more directional beam BM by controlling radio signals transmitted from multiple antenna elements; Carrier Aggregation (CA), which uses multiple component carriers (CCs) bundled together; and Dual Connectivity (DC), which communicates to two or more transport blocks simultaneously between the UE and each of two NG-RAN Nodes.

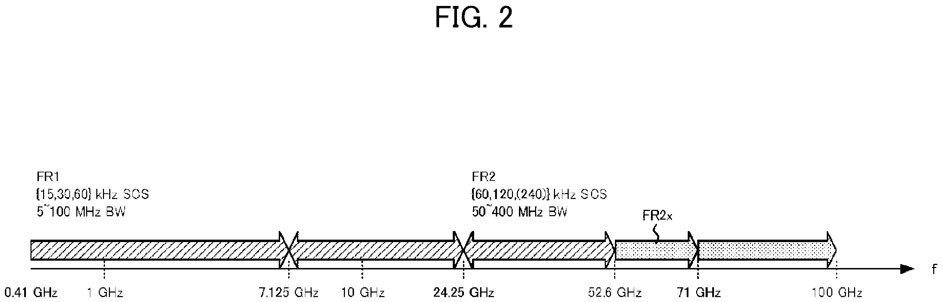

Further, the radio communication system 10 supports multiple frequency ranges (FRs). FIG. 2 shows frequency ranges used in the radio communication system 10.

As shown in FIG. 2, the radio communication system 10 supports FR1 and FR2. The frequency bands of each FR are as follows.

• FR1: 410 MHz to 7.125 GHz
• FR2: 24.25 GHz to 52.6 GHz
FR1 uses subcarrier spacing (SCS) of 15, 30 or 60 kHz and may use a bandwidth (BW) of 5 to 100 MHz. FR2 has a higher frequency than FR1 and may use SCS of 60 or 120 kHz (240 kHz may be included) and may use a bandwidth (BW) of 50 to 400 MHz.

The SCS may be interpreted as a numerology. The numerology is defined in 3GPP TS38.300 and corresponds to one subcarrier interval in a frequency domain.

Furthermore, the radio communication system 10 supports a higher frequency band than the frequency band of the FR2. Specifically, the radio communication system 10 supports a frequency band greater than 52.6 GHz and up to 71 GHz or 114.25 GHz. Such a high frequency band may be referred to as "FR2x" for convenience.

In order to solve a problem of the influence of phase noise increasing in the high frequency bands, a Cyclic Prefix-Orthogonal Frequency Division Multiplexing (CP-OFDM)/ Discrete Fourier Transform-Spread (DFT-S-OFDM) with a larger sub-carrier spacing (SCS) may be applied when a band greater than 52.6 GHz is used.

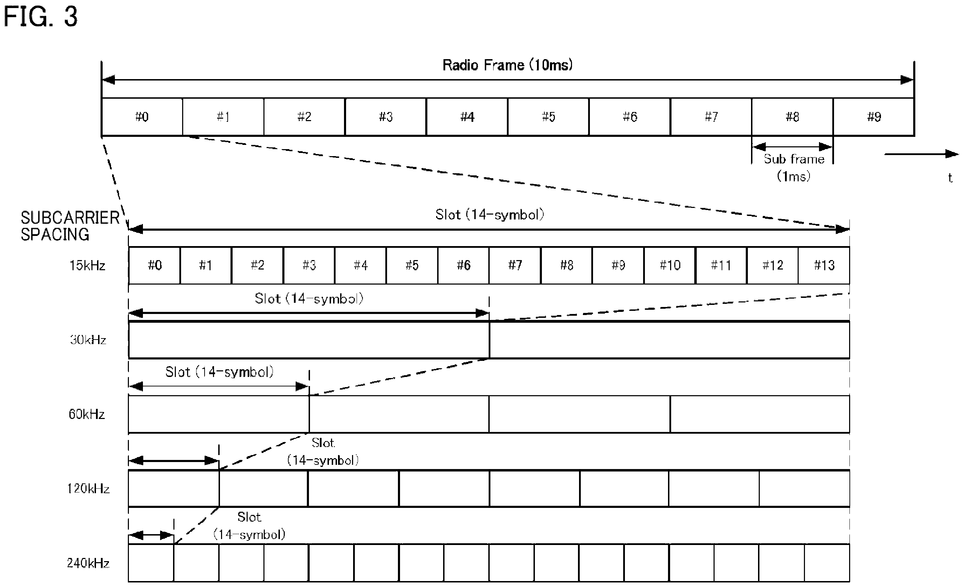

FIG. 3 shows a configuration example of a radio frame, a sub-frame and a slot used in a radio communication system 10.

As shown in FIG. 3, one slot is constituted of 14 symbols, and the larger (wider) the SCS, the shorter a symbol period (and a slot period). The SCS is not limited to the interval (frequency) shown in FIG. 3. For example, 480 kHz, 960 kHz, and the like may be used.

The number of symbols constituting one slot does not necessarily have to be 14 symbols (for example, 28 symbols, 56 symbols). Further, the number of slots per sub-frame may vary depending on the SCS.

It should be noted that the time direction (t) shown in FIG. 3 may be referred to as a time domain, symbol period, symbol time, and the like. The frequency direction may be referred to as a frequency domain, resource block, subcarrier, bandwidth part (BWP), and the like.

A DMRS is a type of reference signal and is prepared for various channels. Here, unless otherwise specified, a DMRS may mean a DMRS for downstream data channel, specifically a Physical Downlink Shared Channel (PDSCH). However, a DMRS for an uplink data channel, specifically a Physical Uplink Shared Channel (PUSCH), may be interpreted as the same DMRS as used for the PDSCH.

The DMRS may be used for channel estimation in a device, for example, a UE 200, as a part of coherent demodulation. The DMRS may be present only in a resource block (RB) used for PDSCH transmission.

The DMRS may have multiple mapping types. Specifically, the DMRS may have mapping type A and mapping type B. In mapping type A, the first DMRS is located in the second or third symbol of a slot. In mapping type A, the DMRS may be mapped with reference to a slot boundary regardless of where actual data transmission is initiated in the slot. The reason why the first DMRS is placed in the second or third symbol of the slot may be interpreted as a way to place the first DMRS after the control resource sets (CORESET).

In mapping type B, the first DMRS may be placed in the first symbol of the data allocation. That is, the location of the DMRS may be given relative to a place in which the data is located, rather than relative to the slot boundary.

Further, the DMRS may have more than one type. Specifically, the DMRS may have Type 1 and Type 2. Type 1 and Type 2 differ in the maximum number of mapping and orthogonal reference signals in a frequency domain. Type 1 can output up to four orthogonal signals in a single-symbol DMRS, and Type 2 can output up to eight orthogonal signals in a double-symbol DMRS.

### (2) Function block configuration of radio communication system

Next, a function block configuration of the radio communication system 10 will be described.

First, the function block configuration of the UE 200 will be described.

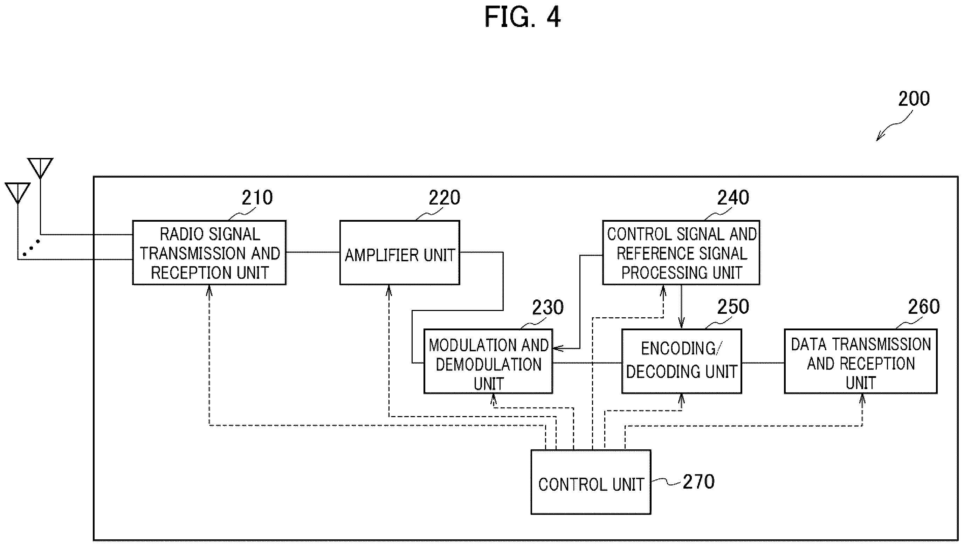

FIG. 4 is a function block configuration diagram of the UE 200. As shown in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits/receives radio signals in accordance with the NR. The radio signal transmission and reception unit 210 supports Massive MIMO, CA which uses a plurality of CCs bundled together, DC which performs simultaneous communication between the UE and each of the two NG-RAN Nodes, and the like.

The amplifier unit 220 is composed of a Power Amplifier (PA)/ Low Noise Amplifier (LNA) and the like. The amplifier unit 220 amplifies a signal output from the modulation and demodulation unit 230 to a predetermined power level. Further, the amplifier unit 220 amplifies an RF signal output from the radio signal transmission and reception unit 210.

The modulation and demodulation unit 230 executes data modulation/demodulation, transmission power setting, resource block allocation, and the like for each predetermined communication destination (the gNB 100 or other gNBs). Cyclic Prefix-Orthogonal Frequency Division Multiplexing (CP-OFDM)/Discrete Fourier Transform-Spread (DFT-S-OFDM) may be applied to the modulation and demodulation unit 230. DFT-S-OFDM may be used not only for the uplink (UL) but also for the downlink (DL).

The control signal and reference signal processing unit 240 executes processing related to various control signals transmitted/received by the UE 200 and various reference signals transmitted/received by the UE 200.

Specifically, the control signal and reference signal processing unit 240 receives various control signals transmitted from the gNB 100 via a predetermined control channel, for example, control signals of a radio resource control layer (RRC). Further, the control signal and reference signal processing unit 240 transmits various control signals to the gNB 100 via a predetermined control channel.

The control signal and reference signal processing unit 240 executes processing using a reference signal (RS) such as a demodulation reference signal (DMRS) and a phase tracking reference signal (PTRS).

The DMRS is a known reference signal (pilot signal) between a base station and a terminal for each terminal for estimating a fading channel used for data demodulation. The PTRS is a reference signal for each terminal for estimating phase noise, which is a problem in a high frequency band.

In addition to the DMRS and the PTRS, the reference signals may include a Channel State Information-Reference Signal (CSI-RS), a Sounding Reference Signal (SRS), and a Positioning Reference Signal (PRS) for position information.

Further, the channels include a control channel and a data channel. The control channels may include Physical Downlink Control Channel (PDCCH), Physical Uplink Control Channel (PUCCH), Random Access Channel (RACH: Downlink Control Information (DCI) including Random Access Radio Network Temporary Identifier (RA-RNTI)), Physical Broadcast Channel (PBCH) and the like.

Further, the data channel includes the Physical Downlink Shared Channel (PDSCH) and the Physical Uplink Shared Channel (PUSCH). Data means data transmitted via a data channel. A data channel may be read as a shared channel.

Here, the control signal and reference signal processing unit 240 may receive downlink control information (DCI). The DCI includes existing fields for storing DCI Formats, Carrier indicator (CI), BWP indicator, Frequency Domain Resource Assignment (FDRA), Time Domain Resource Assignment (TDRA), Modulation and Coding Scheme (MCS), HPN (HARQ Process Number), New Data Indicator (NDI), Redundancy Version (RV), and the like.

A value stored in a DCI Format field is an information element that designates the format of the DCI. A value stored in a DCI field is an information element that designates the CC to which the DCI applies. The value stored in a BWP indicator field is an information element that designates the BWP to which the DCI applies. The BWP that can be designated by the BWP indicator is set by an information element (BandwidthPart-Config) contained in an RRC message. A value stored in an FDRA field is an information element that designates a frequency domain resource to which the DCI applies. The frequency domain resource is specified by the value stored in the FDRA field and an information element (RA Type) contained in the RRC message. A value stored in a TDRA field is an information element that designates a time domain resource to which the DCI is applied. The time domain resource is specified by the value stored in the TDRA field and information elements (pdsch-TimeDomainAllocationList, pusch-TimeDomainAllocationList) contained in the RRC message. The time domain resource may be specified by the value stored in the TDRA field and a default table. A value stored in a MCS field is an information element that designates the MCS to which the DCI applies. The MCS is specified by a value stored in the MCS and a MCS table. The MCS table may be designated by an RRC message or specified by RNTI scrambling. A value stored in a HPN field is an information element that designates the HARQ Process to which the DCI is applied. A value stored in the NDI is an information element that specifies whether the data to which the DCI is applied is first-time transmission data. A value stored in a RV field is an information element that designates the redundancy of the data to which the DCI is applied.

In an embodiment, the control signal and reference signal processing unit 240 constitutes a transmission unit that transmits feedback on the data. As described later, the data may include data related to the Multicast and Broadcast Services (MBS). As a mode for transmitting feedback (hereafter referred to as HARQ feedback), the first mode (hereafter referred to as NACK-only feedback) for transmitting a negative response (NACK) without transmitting an affirmative response (ACK) and the second mode (hereafter referred to as ACK/NACK feedback) for transmitting both an affirmative response (ACK) and a negative response (NACK) are supported. The NACK-only feedback is an example of the first feedback, and the ACK/NACK feedback is an example of the second feedback.

The encoding/decoding unit 250 executes data dividing/concatenation and channel encoding/decoding for each predetermined communication destination (the gNB 100 or other gNBs).

Specifically, the encoding/decoding unit 250 divides the data output from the data transmission and reception unit 260 into divided data with a predetermined size and executes channel coding for the divided data. The encoding/decoding unit 250 decodes the data output from the modulation and demodulation unit 230 and concatenates the decoded data.

The data transmission and reception unit 260 executes transmission/reception of a protocol data unit (PDU) and a service data unit (SDU). Specifically, the data transmission and reception unit 260 executes assembly/disassembly of the PDU/SDU in a plurality of layers (such as Media access control layer (MAC), radio link control layer (RLC), packet data convergence protocol layer (PDCP)). Further, the data transmission and reception unit 260 executes error correction and retransmission control of the data based on Hybrid Automatic Repeat Request (HARQ).

In the embodiment, the data transmission and reception unit 260 constitutes a reception unit for receiving data via a downlink channel in data distribution for a plurality of terminals. Data distribution for a plurality of terminals may be referred to as Multicast and Broadcast Services (MBS). The downlink channel may include PDSCH (multicast) transmitted by multicast and PDSCH (unicast) transmitted by unicast. In the following, PDSCH (multicast) and PDSCH (unicast) are collectively referred to as PDSCH (multicast/unicast). The reception of PDSCH (multicast/unicast) may be read as the reception of data via PDSCH (multicast/unicast).

The control unit 270 controls each function block constituting the UE 200. In the embodiment, the control unit 270 constitutes a control unit for controlling feedback. When the first uplink channel (hereafter referred to as MBS PUCCH) related to the first feedback (hereafter referred to as NACK-only feedback) for PDSCH (multicast) reception temporally overlaps with the second uplink channel (for example, Unicast PUSCH/PUCCH, that is, Unicast PUSCH transmission, or PUCCH transmission for PDSCH (unicast) reception, or PUCCH transmission including at least one of SR/CSI) different from the first uplink channel, the control unit 270 determines a processing method of the first uplink channel and the second uplink channel according to the handling method related to the NACK-only feedback.

Here, the first uplink channel may be referred to as MBS PUCCH so that it is distinguished from the second uplink channel. The second uplink channel is an uplink channel used for purposes other than MBS and may be scheduled by a UL grant included in the DCI.

Second, a functional block configuration of the gNB 100 will be described.

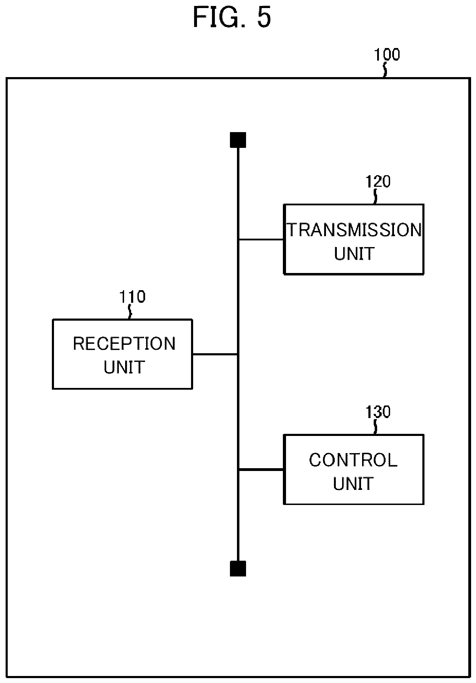

FIG. 5 is a functional block configuration diagram of the gNB 100. As shown in FIG. 5, the gNB 100 includes a reception unit 110, a transmission unit 120, and a control unit 130.

The reception unit 110 receives various signals from the UE 200. The reception unit 110 may receive a UL signal via a PUCCH or a PUSCH. In the embodiment, the reception unit 110 may receive the feedback described above.

The transmission unit 120 transmits various signals to the UE 200. The transmission unit 120 may transmit the DL signal via the PDCCH or the PDSCH. In the embodiment, the transmission unit 120 may transmit the PDSCH (multicast/unicast) at the MBS. Transmission of the PDSCH (multicast/unicast) may be read as transmission of data via the PDSCH (multicast/unicast).

The control unit 130 controls the gNB 100. In the embodiment, when the first uplink channel (MBS PUCCH) related to the first feedback (NACK-only feedback) temporally overlaps with the second uplink channel (for example, Unicast PUSCH/PUCCH) different from the first uplink channel, the control unit 130 may assume that a processing method of the first uplink channel and the second uplink channel is determined in accordance with a handling method related to the NACK-only feedback.

### (3) Provision of MBS

Multicast and Broadcast Services (MBS) may be provided in the radio communication system 10.

For example, it is assumed that a large number of the UEs 200 may be located within a certain geographic area in a stadium, hall, and the like, and the large number of UEs 200 may simultaneously receive the same data. In such a case, the use of MBS rather than unicast is effective.

Unicast may be interpreted as communication that takes place on a one-to-one basis with the network, designating a specific UE 200 (UE 200-specific identification information may be designated).

Multicast may be interpreted as communication that takes place on a one-to-many (a specific number) basis with the network, designating a plurality of specific UEs 200 (multicast identification information may be designated). It is noted that the number of UEs 200 receiving data of the reception multicast may ultimately be one.

Broadcast may be interpreted as communication that takes place on a one-to-unspecified-number basis with the network for all UEs 200. The multicast/broadcast data may have the same copied content, but some content, such as headers, may be different. The multicast/broadcast data may also be transmitted (distributed) simultaneously, but does not necessarily require strict concurrency, and may include propagation delays and/or processing delays within a RAN node.

In a target UE 200, a state of a radio resource control layer (RRC) may be set to an idle state (RRC idle), a connected state (RRC connected), or any other state (for example, an inactive state). The inactive state may be interpreted as a state in which some settings of the RRC are maintained.

The MBS assumes the following three types of methods for scheduling multicast/broadcast PDSCH, specifically scheduling MBS packets (which may be read as data). An RRC connected UE may be read as an RRC idle UE or an RRC inactive UE.

- PTM Transmission Mode 1 (PTM-1):
   - A group-common PDSCH is scheduled for a MBS group of an RRC connected UE using a group-common Physical Downlink Control Channel (PDCCH).
   - CRC of PDCCH and PDSCH are scrambled by a group-common Radio Network Temporary Identifier (RNTI), which may be referred to as G-RNTI.
- PTM Transmission Mode 2 (PTM-2):
   - A group-common PDSCH is scheduled for a MBS group of an RRC connected UE using a UE-specific PDCCH.
   - CRC of the PDCCH is scrambled by a UE-specific RNTI.
   - The PDSCH is scrambled by a group-common RNTI.
- PTP transmission mode:
   - A UE-specific PDSCH is scheduled for the RRC connected UE using the UE-specific PDCCH.
   - CRC of the PDCCH and PDSCH are scrambled by the UE-specific RNTI. This may mean that MBS packets are transmitted by unicast.

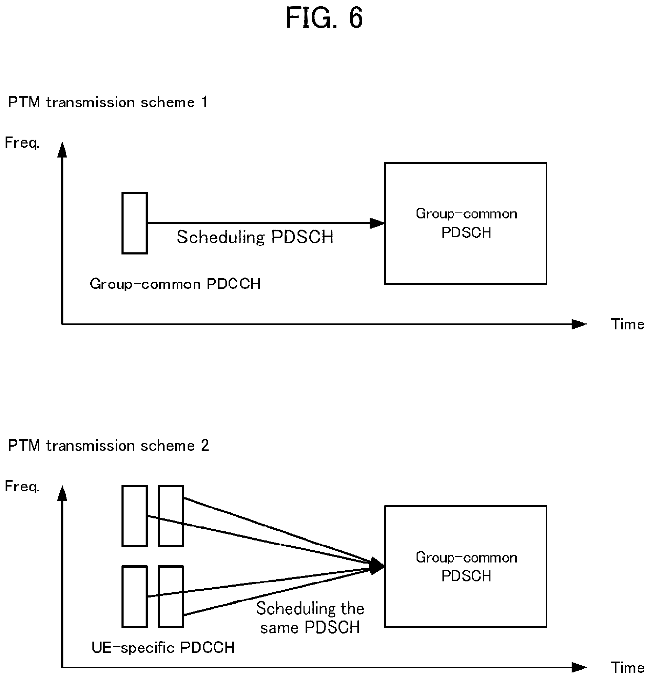

FIG. 6 shows a configuration example of the PTM transmission mode 1 and the PTM transmission mode 2. The UE-specific PDCCH/PDSCH can be identified by the target UE, but it need not be identified by other UEs in the same MBS group. The group-common PDCCH/PDSCH is transmitted in the same time/frequency resource and can be identified by all UEs in the same MBS group. The names of the PTM transmission modes 1 and 2 are tentative and may be called by different names as long as the operations described above are executed.

Further, in point-to-point (PTP) distribution, the RAN node may wirelessly distribute individual copies of MBS data packets to individual UEs. In point-to-multipoint (PTM) distribution, the RAN node may wirelessly distribute a single copy of MBS data packets to a set of UEs.

In order to improve reliability of the MBS, the following two feedback methods are assumed for Hybrid Automatic repeat request (HARQ) feedback, specifically, HARQ feedback for the multicast/broadcast PDSCH.

- Option 1: Feedback of both ACK and NACK (ACK/NACK feedback)
   - A UE that has successfully received/decoded PDSCH transmits an ACK.
   - A UE that has failed to receive/decode PDSCH transmits a NACK.
   - Physical Uplink Control Channel (PUCCH) resource setting: PUCCH-Config can be set for multicast.
   - PUCCH resources: Whether to be shared/orthogonal between UEs depends on network settings.
   - HARQ-ACK codebook (CB): type-1 and type-2 (CB decision algorithm specified in 3GPP TS 38.213) are supported.
   - Multiplexing: Unicast or multicast are applicable.
- Option 2: NACK-only feedback
   - A UE that has successfully received/decoded PDSCH does not transmit an ACK (does not transmit a response).
   - A UE that has failed to receive/decode PDSCH transmits a NACK.
   - For a predetermined UE, PUCCH resource settings can be set separately for unicast and group cast (multicast).

It should be noted that ACK may be called positive acknowledgement and NACK may be called negative acknowledgement. HARQ may be called automatic retransmission request.

Enabling/disabling of Option 1 or Option 2 may be applied to any of the following:
- RRC and Downlink Control Information (DCI)
- RRC only

Further, the following contents are assumed for semi-persistent scheduling (SPS) for multicast/broadcast PDSCH:
- SPS group-common PDSCH is adopted.
   - Multiple SPS group-common PDSCH can be set for UE capability.
   - HARQ feedback for the SPS group-common PDSCH is possible.
   - At least activation/deactivation via group-common PDCCH (downlink control channel) is possible.

It should be noted that deactivation may be replaced with other synonymous terms such as release. For example, activation may be replaced with boot, start, trigger, and the like, and deactivation may be replaced with end, stop, and the like.

The SPS is a scheduling used as a contrast to dynamic scheduling and may be referred to as semi-fixed, semi-continuous or semi-persistent scheduling and may be interpreted as Configured Scheduling (CS) .

Scheduling may be interpreted as a process of allocating resources to transmit data. Dynamic scheduling may be interpreted as the mechanism by which all PDSCH are scheduled by the DCI (for example, DCI1 _0, DCI1 _1 or DCI1 _2). SPS may be interpreted as a mechanism by which a PDSCH transmission is scheduled by upper-layer signaling, such as an RRC message.

Further, for a physical layer, there may be scheduling categories of time-domain scheduling and frequency-domain scheduling.

Multicast, group cast, broadcast, and MBS may be interchanged. Multicast PDSCH and PDSCH scrambled by the group common RNTI may be interchanged.

Further, the terms of data and packet may be interchanged and interpreted as synonymous terms such as signal, data unit, and the like. Furthermore, transmission, reception, transfer and distribution may be interchanged.

### (4) Problems

Problems related to the NACK-only feedback are described below.

First, when two or more NACK-only feedbacks can be obtained in a slot in which the PUCCH is scheduled, the following handling methods are considered for handling two or more NACK-only feedbacks.

Handling method 1 is a method of converting the NACK-only feedback into ACK/NACK feedback. Specifically, the UE 200 can multiplex HARQ-ACK bits by converting the NACK-only feedback into the ACK/NACK feedback.

Handling method 2 is a method that supports the transmission of PUCCH for two or more NACK-only feedbacks in a specific time (hear, slot). Specifically, the specific time is divided into two or more units of time (for example, sub-slots), and the UE 200 may transmit PUCCH for one NACK-only feedback per sub-slot.

Handling method 3 is a method that supports the transmission of PUCCH for two or more NACK-only feedbacks in a specific time (Here, slot). Specifically, the UE 200 can transmit PUCCH for two or more NACK-only feedbacks in a slot without dividing the specific time into two or more units of time (for example, sub-slot). That is, two PUCCHs can be transmitted in the slot, each having information related to the NACK-only feedback.

Handling method 4 is a method for associating a combination of two or more NACK-only feedbacks (HARQ-ACK bit) with a specific sequence or a specific resource for the PUCCH. In such a case, the UE 200 transmits combinations that include NACK and does not transmit a combination of all ACKs.

Handling method 5 is a method of bundling two or more NACK-only feedbacks (HARQ-ACK bit). For example, if at least one of two or more NACK-only feedbacks has a NACK, the two or more NACK-only feedbacks are combined to perform one NACK feedback, and if none of the two or more NACK-only feedbacks has a NACK, no NACK-only feedback is performed.

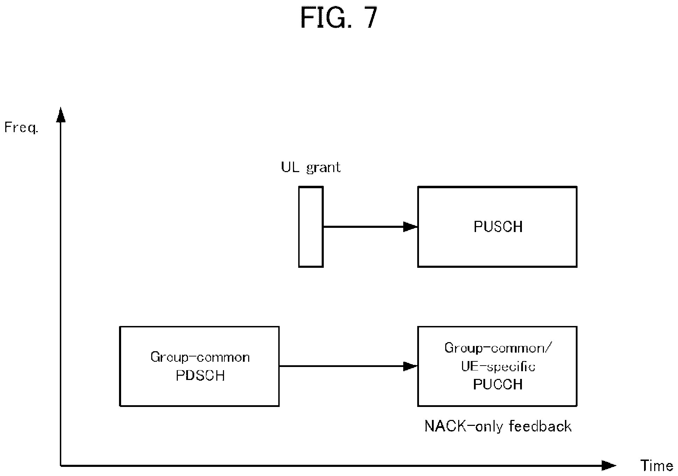

Under such a premise, as shown in FIG. 7, there can be a case in which a PUCCH related to the NACK-only feedback for group-common PDSCH temporally overlaps with the PUCCH including at least one of PUSCH and/or other HARQ-ACK/SR/CSI. In such a case, if the operation of the UE is not clarified according to the handling method of the NACK-only feedback described above, the gNB 100 cannot recognize whether the NACK-only feedback is transmitted or not.

### (5) Operation example

In the following, an operation example for the above-mentioned problem will be described. An operation example is described for each handling method of the NACK-only feedback.

### (5.1) Handling method 1

As described above, handling method 1 is a method of converting the NACK-only feedback into the ACK/NACK feedback. The UE 200 determines a processing method of MBS PUCCH and Unicast PUSCH/PUCCH depending on whether handling method 1 is applied.

Whether the handling method 1 is applied may be predefined in the radio communication network 10 and may be implicitly or explicitly designated by at least one of an RRC message, a MAC CE message and DCI. The designation may be read as setting, updating, indicating, activating, deactivating, and the like. Alternatively, whether the handling method 1 is applied may be determined based on the number of times of the NACK-only feedback, and may be determined based on the number of times of the NACK-only feedback where the NACK-only feedback temporally overlap with PUCCH containing at least one of the PUSCH and/or other HARQ-ACK/SR/CSI.

First, the UE 200 may execute option 1 as described below when handling method 1 is applied.

In option 1-1, if a priority index of a MBS PUCCH (HARQ ACK/NACK) and a priority index of a Unicast PUCCH (SR or CSI) are the same, the UE 200 may multiplex both or drop either one based on the upper layer parameter (for example, simultaneous HARQ-ACK-CSI).

In option 1-2, the UE 200 may multiplex the HARQ ACK/NACK with the Unicast PUSCH if the priority index of the MBS PUCCH (HARQ ACK/NACK) and the priority index of the Unicast PUSCH are the same.

In option 1-3, if the priority index of the MBS PUCCH (HARQ ACK/NACK) and the priority index of the Unicast PUCCH (HARQ-ACK/NACK) are the same, the UE 200 may multiplex by concatenating each sub-codebook or by generating a codebook from each PDSCH-to-PUCCH offset k1 and a TDRA Table.

In option 1-4, if the priority index of the MBS PUCCH (HARQ ACK/NACK) is different from the priority index of the Unicast PUCCH, the UE 200 may drop either one with a lower priority index, or multiplex both or drop either one based on upper-layer parameters.

Second, the UE 200 may execute the following options when the handling method 1 is not applied.

Option 2a describes a case in which the MBS PUCCH temporally overlaps with the Unicast PUSCH.

In option 2a-1, the UE 200 may transmit the Unicast PUSCH by multiplexing the NACK-only feedback on the Unicast PUSCH. In such a case, the UE 200 need not transmit the MBS PUCCH.

In option 2a-2, the UE 200 may transmit the MBS PUCCH without multiplexing the NACK-only feedback on the Unicast PUSCH. In such a case, the UE 200 may transmit the Unicast PUSCH or need not transmit the Unicast PUSCH.

In option 2a-3, the UE 200 may transmit the Unicast PUCCH by multiplexing the NACK-only feedback on the Unicast PUSCH and transmit MBS PUCCH.

In option 2a-4, the UE 200 may not transmit the MBS PUCCH without the NACK-only feedback multiplexed on the Unicast PUSCH. In such a case, the UE 200 may transmit the Unicast PUSCH or need not transmit the Unicast PUSCH.

In option 2a-5, the UE 200 may apply any of options 2a-1 through 2a-4 based on whether a NACK is generated for the group-common PDSCH. For example, the UE 200 may apply option 2a-4 if no NACK is generated for the group-common PDSCH. The UE 200 may apply option 2a-1 or option 2a-2 if a NACK is generated for the group-common PDSCH.

In option 2a-6, the UE 200 may apply any of options 2a-1 to option 2a-4 based on the number of bits in the NACK-only feedback. For example, the UE 200 may apply option 2a-1 when the number of bits of the NACK-only feedback is 2 bits or less. In such a case, the UE 200 may multiplex the NACK-only feedback on the Unicast PUSCH by puncturing the Unicast PUSCH. The UE 200 may apply option 2a-4 if the number of bits in the NACK-only feedback is greater than 2 bits.

In option 2a-7, the UE 200 may apply any of options 2a-1 through 2a-4 based on a PUCCH format of the MBS PUCCH related to the NACK-only feedback.

In option 2a-8, the UE 200 may apply any of options 2a-1 through 2a-4 based on the following parameters: The parameters may include an RRC parameter, MAC CE, DCI format, DCI field, RNTI for scrambling PDCCH (CRC of DCI), CORSET, search space, and one or more parameters selected from UE Capability.

In option 2a-9, a method to multiplex the NACK-only feedback on the MBS with the Unicast PUSCH may be different from a method to multiplex the HARQ-ACK/NACK for the group-common PDSCH on the Unicast PUSCH. For example, the UE 200 may puncture the Unicast PUSCH regardless of the number of bits in the NACK-only feedback, thereby multiplexing the NACK-only feedback on the Unicast PUSCH.

In option 2a-10, a UL Downlink Assignment Index (UL DAI) of the UL grant (DCI) that schedules the Unicast PUSCH may be a value that is intended to multiplex the NACK-only feedback on the Unicast PUSCH. In such a case, the UE 200 may multiplex the NACK-only feedback on the Unicast PUSCH based on the UL DAI of the UL grant (DCI) that schedules the Unicast PUSCH. Alternatively, the UL DAI of the UL grant (DCI) that schedules the Unicast PUSCH may be a value for which it is assumed that the NACK-only feedback is not multiplexed on the Unicast PUSCH. In such a case, the UE 200 need not multiplex the NACK-only feedback on the Unicast PUSCH based on the UL DAI of the UL grant (DCI) that schedules the Unicast PUSCH.

After the UL grant (DCI) that schedules the Unicast PUSCH, the UE 200 may not assume that it receives DCI (DL Assignment) that schedules the group-common PDSCH corresponding to the NACK-only feedback that may be multiplexed on the Unicast PUSCH. After the UL grant (DCI) that schedules the Unicast PUSCH, the UE 200 may not assume that it receives a DCI that schedules the MBS PUCCH (NACK-only feedback) that may temporally overlap with the Unicast PUSCH.

In option 2a-11, the UE 200 may transmit an ACK to the group-common PDSCH if it has successfully received/decoded the group-common PDSCH and has an opportunity to transmit a HARQ-ACK. For example, the UE 200 may multiplex the ACK to the group-common PDSCH on the Unicast PUSCH if there is a Unicast PUSCH that temporally overlaps with the MBS PUCCH (for example, option 2a-1). In other words, the UE 200 may determine that a temporal overlap is occurring between the MBS PUCCH and the Unicast PUSCH/PUCCH even if there is no need to transmit the NACK-only feedback.

In option 2a-12, the UE 200 may transmit an ACK to the group-common PDSCH regardless of whether the NACK-only feedback is set or indicated if the group-common PDSCH is successfully received/decoded and there is an opportunity to transmit a HARQ-ACK. For example, the UE 200 may multiplex the ACK to the group-common PDSCH on the Unicast PUSCH regardless of whether the NACK-only feedback is set or indicated if there is a Unicast PUSCH that temporally overlaps with the MBS PUCCH (for example, Option 2a-1). In other words, the UE 200 may determine that there is a temporal overlap occurring between the MBS PUCCH and the Unicast PUSCH/PUCCH even if there is no need to transmit the NACK-only feedback.

Option 2b describes a case in which the MBS PUCCH temporally overlaps with the Unicast PUCCH. In the following, the MBS PUCCH is referred to as PUCCH X and the Unicast PUCCH is referred to as PUCCH Y. The UCI (NACK-only feedback) related to the PUCCH X is referred to as UCI X, and the UCI related to the PUCCH Y is referred to as UCI X.

In option 2b-1, the UE 200 may multiplex the PUCCH X and the PUCCH Y on a PUCCH (hereafter referred to as PUCCH Z) other than PUCCH X and PUCCH Y. The PUCCH that multiplex UCI X may be predefined in the radio communication network 10 and may be a PUCCH with a high priority index. The UE 200 need not transmit either PUCCH X or PUCCH Y.

In option 2b-2, the UE 200 may drop either one of PUCCH X or PUCCH Y and transmit the other PUCCH X or PUCCH Y. Whether PUCCH X or PUCCH Y is transmitted may be predefined in the radio communication network 10 and may be defined based on the priority indices of PUCCH X and PUCCH Y. A priority index may be specified by a priority indicator of the DCI that schedules PUCCH X and PUCCH Y. If the priority indices of PUCCH X and PUCCH Y are the same, the UE 200 may drop either one of PUCCHs. If the priority indices of the PUCCH X and the PUCCH Y are different, the UE 200 may drop the PUCCH having a low priority index and transmit the PUCCH having a low priority index.

In option 2b-3, the UE 200 may transmit the UCI X with the PUCCH X and the UCI Y with the PUCCH Y without multiplexing the PUCCH X and the PUCCH Y.

In option 2b-4, the UE 200 may apply any of options 2b-1 through 2b-3 based on whether a NACK is generated for the group-common PDSCH.

In option 2b-5, the UE 200 may apply any of options 2b-1 through 2b-3 based on the number of bits in UCI X or the total number of bits in UCI X and UCI Y.

In option 2b-6, the UE 200 may apply any of options 2b-1 through 2b-3 based on at least a PUCCH format of PUCCH X or PUCCH Y.

In option 2b-7, the UE 200 may apply any of options 2b-1 through 2b-3 based on the following parameters: The parameters may include one or more parameters selected from RRC parameter, MAC CE, DCI format, DCI field, RNTI for scrambling PDCCH (CRC of DCI), CORSET, search space, and UE Capability.

In option 2a-8, the UE 200 may transmit an ACK for a group-common PDSCH if it has successfully received/decoded the group-common PDSCH and has an opportunity to transmit a HARQ-ACK. For example, the UE 200 may multiplex an ACK to a group-common PDSCH on the PUCCH Y if the PUCCH X and the PUCCH Y temporally overlap and the UE 200 decides to transmit the PUCCH Y. Alternatively, the UE 200 may multiplex an ACK to a group-common PDSCH on the PUCCH Y if the PUCCH X, the PUCCH Y and the PUCCH X temporally overlap and the UE 200 decides to transmit the PUCCH Y. In other words, the UE 200 may determine that there is a temporal overlap occurring between the MBS PUCCH and the Unicast PUSCH/PUCCH even if it is not necessary to transmit the NACK-only feedback.

In option 2a-9, the UE 200 may transmit an ACK to a group-common PDSCH regardless of whether NACK-only feedback is set or indicated if the group-common PDSCH is successfully received/decoded and there is an opportunity to transmit a HARQ-ACK. For example, the UE 200 may multiplex the ACK to the group-common PDSCH on the PUCCH Y regardless of whether the NACK-only feedback is set or indicated if the PUCCH X and the PUCCH Y temporally overlap and the UE 200 decides to transmit the PUCCH Y. Alternatively, when the PUCCH X, the PUCCH Y and the PUCCH X temporally overlap and the UE 200 decides to transmit PUCCH Y, the UE 200 may multiplex the ACK to the group-common PDSCH on the PUCCH Y, regardless of whether the NACK-only feedback is set or indicated. In other words, the UE 200 may determine that the MBS PUCCH and the Unicast PUSCH/PUCCH temporally overlap, even if the NACK-only feedback does not need to be transmitted.

### (5.2) Handling method 2

As described above, the handling method 2 is a method of transmitting a PUCCH related to the NACK-only feedback per sub-slot. When the handling method 2 is applied, the UE 200 determines, based on a specific condition, whether the MBS PUCCH temporally overlaps with the Unicast PUSCH/PUCCH.

Whether the handling method 2 is applied may be predefined in the radio communication network 10 and may be implicitly or explicitly designated by at least one of an RRC message, a MAC CE message and DCI. The designation may be read as setting, updating, indicating, activating, deactivating, and the like.

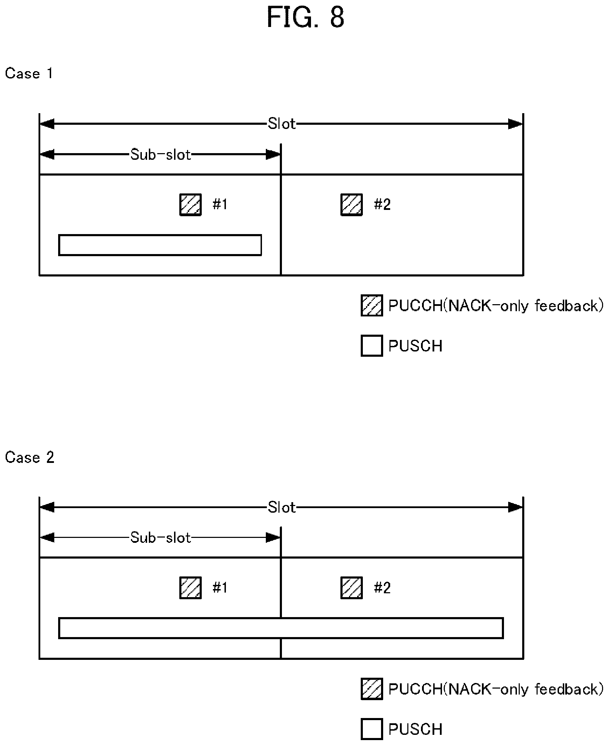

For example, as shown in FIG. 8, a case is considered, in which two MBS PUCCHs (in FIG. 8, PUCCH#1, PUCCH#2) are scheduled and a Unicast PUSCH (which is simply shown as PUSCH in FIG. 8) is scheduled in a specific period (Slot). Although the Unicast PUSCH is illustrated in FIG. 8, the second uplink channel may be a Unicast PUCCH.

In such a case, the specific condition is determined on a Sub-slot basis. That is, the specific condition is condition for determining whether resources related to the Unicast PUSCH overlap with other the MBS PUCCH (NACK-only feedback) when the Unicast PUSCH is scheduled in the Sub-slot in which the MBS PUCCH (NACK-only feedback) is scheduled.

The UE 200 determines a processing method of MBS PUCCH and Unicast PUSCH/PUCCH based on whether the specific condition is satisfied.

First, in Case 1, PUCCH#1 temporally overlaps with PUSCH, but the PUSCH that temporally overlaps with PUCCH#1 does not temporally overlap with PUCCH#2. Therefore, the UE 200 determines that the specific condition is not satisfied. The operation of the UE 200 in the case that the specific condition is not satisfied may be the operation described below.

For example, since the PUCCH#1 and the PUSCH temporally overlap, the UE 200 may execute a multiplex method for the handling method 1 (option 2 described above) . Alternatively, the UE 200 may use a multiplex method related to handling method 5 described below. On the other hand, the UE 200 may transmit the PUCCH#2 as it is since the PUCCH#2 does not temporally overlap with the PUSCH.

Second, in Case 2, the PUCCH#1 temporally overlaps with the PUSCH, and the PUSCH that temporally overlaps with the PUCCH#1 also temporally overlaps with the PUCCH#2. Therefore, the UE 200 determines that the specific condition is satisfied. The operation of the UE 200 in the case that the specific condition is satisfied may be option 3 as shown below.

In option 3-1, the UE 200 does not have to assume that the specific condition is satisfied.

In option 3-2, the UE 200 may drop either PUCCH#1 or PUCCH#2.

In option 3-3, the UE 200 may multiplex PUCCH#1 and PUCCH#2. Multiplexing methods related to the handling method 1, the handling method 4, and the handling method 5 may be used as a multiplexing method.

In option 3-4, the UE 200 may apply operations from option 3-1 to option 3-3 based on at least one of a channel type and an information type of the Unicast PUSCH/PUCCH.

### (5.3) Handling method 3

As described above, the handling method 3 is a method of transmitting PUCCH for two or more NACK-only feedbacks. When handling method 3 is applied, the UE 200 determines, based on a specific condition, whether the MBS PUCCH temporally overlaps with the Unicast PUSCH/PUCCH.

Whether handling method 3 is applied may be predefined in the radio communication network 10 and may be implicitly or explicitly designated by at least one of an RRC message, a MAC CE message and DCI. The designation may be read as setting, updating, indicating, activating, deactivating, and the like.

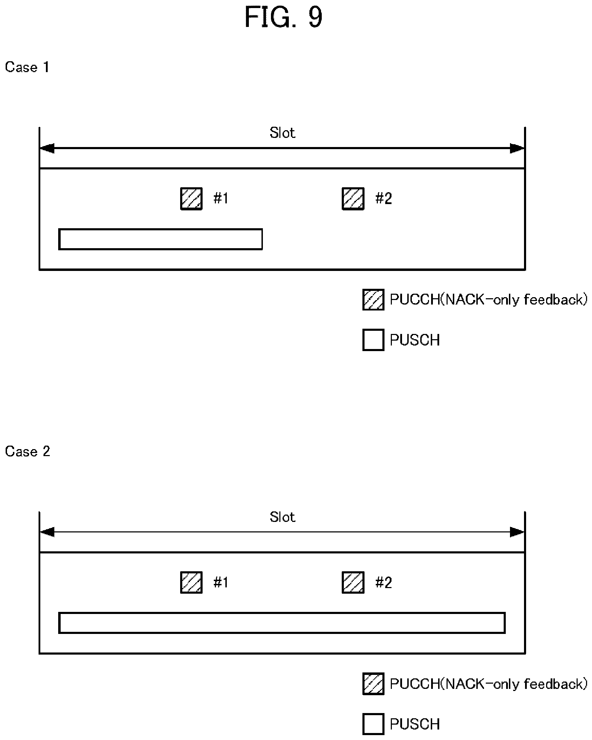

For example, as shown in FIG. 9, a case in which two MBS PUCCHs (In FIG. 9, PUCCH#1, PUCCH#2) related to two or more NACK-only feedbacks are scheduled and the Unicast PUSCH (which is simply shown as PUSCH in FIG. 9) is scheduled in a specific period (Slot). Although the Unicast PUSCH is illustrated in FIG. 9, the second uplink channel may be a Unicast PUCCH.

In such a case, the specific condition is determined on a Slot basis. That is, the specific condition is a condition for determining whether resources related to the unicast PUSCH overlap with other MBS PUCCH (NACK-only feedback) when the Unicast PUSCH is scheduled in the Slot in which the MBS PUCCH (NACK-only feedback) is scheduled.

The UE 200 determines a processing method of the MBS PUCCH and the Unicast PUSCH/PUCCH based on whether the specific condition is satisfied.

First, in Case 1, PUCCH#1 temporally overlaps with PUSCH, but the PUSCH that temporally overlaps with PUCCH#1 does not temporally overlap with PUCCH#2. Therefore, The UE 200 determines that the specific condition is not satisfied. An operation of the UE 200 in the case that the specific condition is not satisfied may be the operation described below.

For example, since PUCCH#1 and PUSCH temporally overlap, the UE 200 may execute a multiplexing method for the handling method 1 (option 2 described above). Alternatively, the UE 200 may use a multiplexing method related to the handling method 5 described below. On the other hand, since PUCCH#2 does not temporally overlap with the PUSCH, the UE 200 may transmit PUCCH#2 as it is.

Second, in Case 2, PUCCH#1 temporally overlaps with PUSCH, and the PUSCH that temporally overlaps with PUCCH#1 also temporally overlaps with PUCCH#2. Therefore, the UE 200 determines that the specific condition is satisfied. The operation of the UE 200 in the case that the specific condition is satisfied may be option 4 shown below.

In option 4-1, the UE 200 does not have to assume that the specific condition is satisfied.

In option 4-2, the UE 200 may drop either PUCCH#1 or PUCCH#2.

In option 4-3, the UE 200 may multiplex PUCCH#1 and PUCCH#2. Multiplexing methods related to the handling method 1, handling method 4, and handling method 5 may be used as a multiplexing method.

In option 4-4, the UE 200 may apply operations from option 3-1 to option 3-3 based on at least one of a channel type and an information type of the Unicast PUSCH/PUCCH.

### (5.4) Handling method 4

As described above, handling method 4 is a method for associating a combination of two or more NACK-only feedbacks (HARQ-ACK bit) with a specific sequence or a specific resource related to PUCCH. The UE 200 determines, based on the specific condition, whether the MBS PUCCH temporally overlaps with the Unicast PUSCH/PUCCH when the handling method 4 is applied.

Whether the handling method 4 is applied may be predefined in the radio communication network 10 and may be implicitly or explicitly designated by at least one of an RRC message, a MAC CE message and DCI. The designation may be read as setting, updating, indicating, activating, deactivating, and the like.

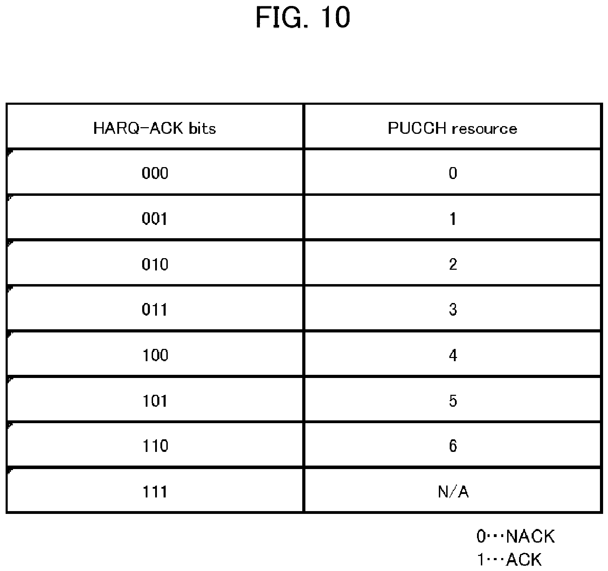

For example, as shown in FIG. 10, a case in which 3bit HARQ-ACK bits are associated with a PUCCH resource will be described. Since the processing is related to the NACK-only feedback, a combination of all ACKs (In FIG. 10, "111") need not be associated with a PUCCH resource.

Under this premise, the UE 200 may determine based on the options described below whether the specific condition is satisfied. In the following, a case that PUCCH resource #2 is selected is illustrated. Further, PUSCH is illustrated as an example of a second uplink channel.

In option 5-1, the specific condition may be a condition that the Unicast PUSCH temporally overlaps with all PUCCH resource candidates that can be selected as PUCCH resources. If the Unicast PUSCH temporally overlaps with at least some of the candidates for each PUCCH resource, it may be determined that the specified condition is satisfied. Alternatively, if the Unicast PUSCH temporally overlaps with all of the candidates for each PUCCH resource, it may be determined that the specified condition is satisfied.

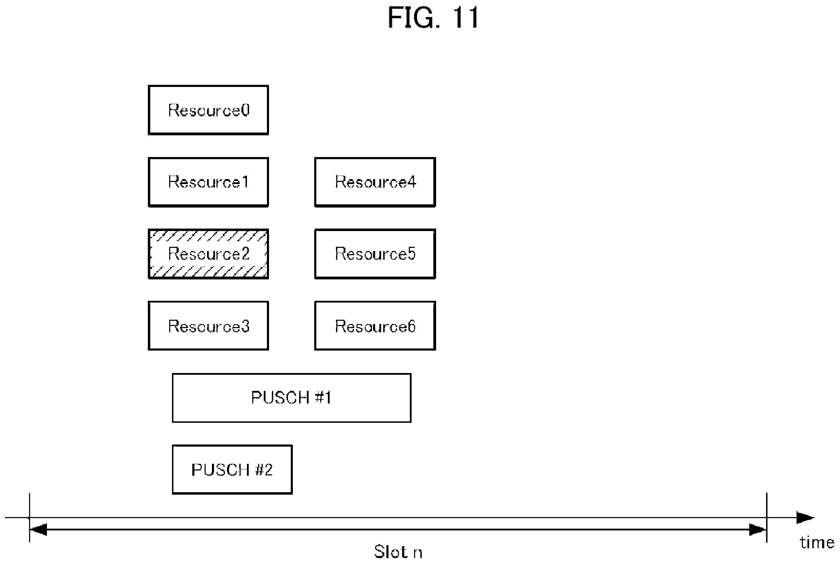

For example, as shown in FIG. 11, for PUSCH#1 (Unicast PUSCH), the UE 200 determines that the specified condition is satisfied since PUSCH#1 temporally overlaps with at least some of Resource 0 through Resource 6 for all of Resource 0 through Resource 6.

The operation of the UE 200 in a case that the specified condition is satisfied may be the operation described below. For example, the UE 200 may execute a multiplexing method for handling method 1 (option 2 described above). Alternatively, the UE 200 may use a multiplexing method related to the handling method 5 described below.

On the other hand, for PUSCH#2 (Unicast PUSCH), since PUSCH#2 does not temporally overlap with Resource 4 to Resource 6, the UE 200 determines that the specified condition is not satisfied.

The behavior of the UE 200 in the case that the specific condition is not satisfied, that is, that some PUCCH resource candidates and the Unicast PUSCH do not temporally overlap, may be the operation described below. For example, the UE 200 may not assume such a case. The UE 200 may transmit MBS PUCCH (in Figure 11, Resource 2) without transmitting PUSCH#2.

In option 5-2, under a premise of treating as a hypothetical PUCCH (for example, reference PUCCH) defined based on the PUCCH resource, the specific condition may be a condition that reference PUCCH and the Unicast PUSCH temporally overlap. If at least a portion of reference PUCCH and the Unicast PUSCH temporally overlap, it may be determined that the specific condition is satisfied. Alternatively, if the entire Reference PUCCH and the Unicast PUSCH temporally overlap, it may be determined that the specific condition is satisfied.

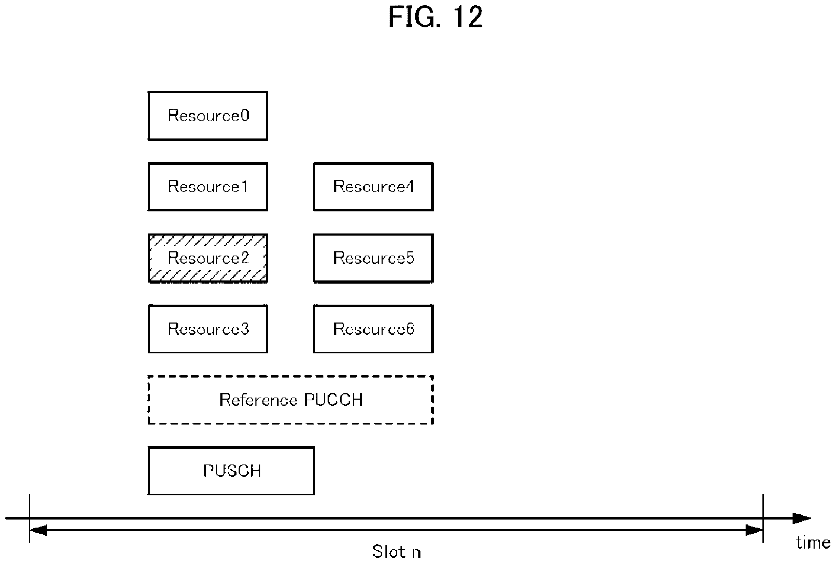

For example, as shown in FIG. 12, since at least a portion of the reference PUCCH and the PUSCH (Unicast PUSCH) temporally overlap, the UE 200 determines that the specific condition is satisfied.

The operation of the UE 200 in the case that the specific condition is satisfied may be the operation described below. For example, the UE 200 may execute a multiplexing method for handling method 1 (option 2 described above). Alternatively, the UE 200 may use a multiplexing method related to the handling method 5 described below.

It should be noted that the reference PUCCH may be defined by all PUCCH resource candidates, may be defined by any PUCCH resource candidate selected from the PUCCH resource candidates, or may be defined separately from the PUCCH resource candidates. Alternatively, the reference PUCCH may be a PUCCH resource derived from all PUCCH resource candidates. For example, the reference PUCCH may be a PUCCH resource of consecutive symbols that include the leading symbol of the foremost PUCCH resource among all PUCCH resource candidates to the last symbol of the rearmost PUCCH resource among all PUCCH resource candidates.

In option 5-3, the specific condition may be a condition that the Unicast PUSCH is scheduled in a specific time (for example, slot) for which PUCCH resource candidates are scheduled, that is, a condition that the Unicast PUSCH overlaps in a specific time (for example, slot) . In such a case, the Unicast PUSCH may not overlap with the candidate PUCCH resource in a given unit of time (for example, symbol).

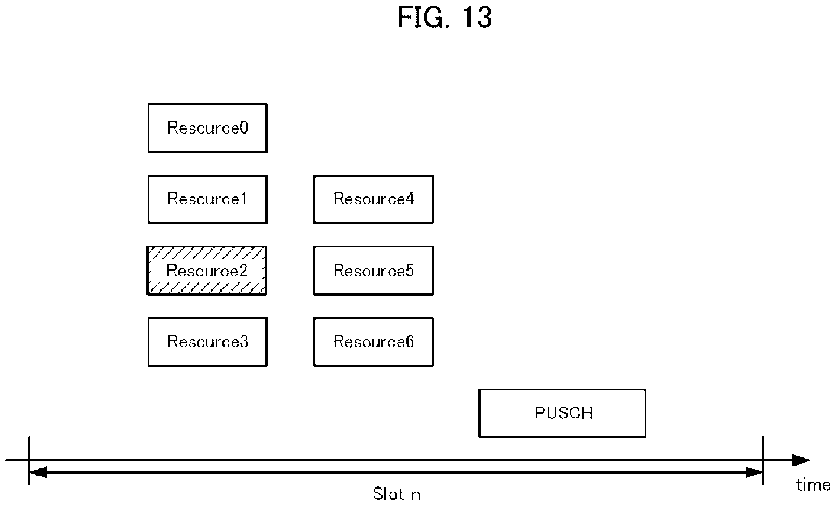

For example, as shown in FIG. 13, since the Unicast PUSCH (which is simply shown as PUSCH in FIG. 13) does not overlap with the PUCCH resource candidate in a given unit of time (for example, symbol), but is scheduled in the same specified time (for example, slot) for the PUCCH resource candidate, the UE 200 may determine that the specified condition is satisfied.

The operation of the UE 200 in the case that the specified condition is satisfied may be the operation described below. For example, the UE 200 may execute a multiplexing method for handling method 1 (option 2 described above). Alternatively, the UE 200 may use a multiplexing method related to handling method 5 described below.

In option 5-4, the specific condition may be a condition that the Unicast PUSCH temporally overlaps with at least one of the candidates for the PUCCH resource. In such a case, the actually selected PUCCH resource and the Unicast PUSCH may not temporally overlap.

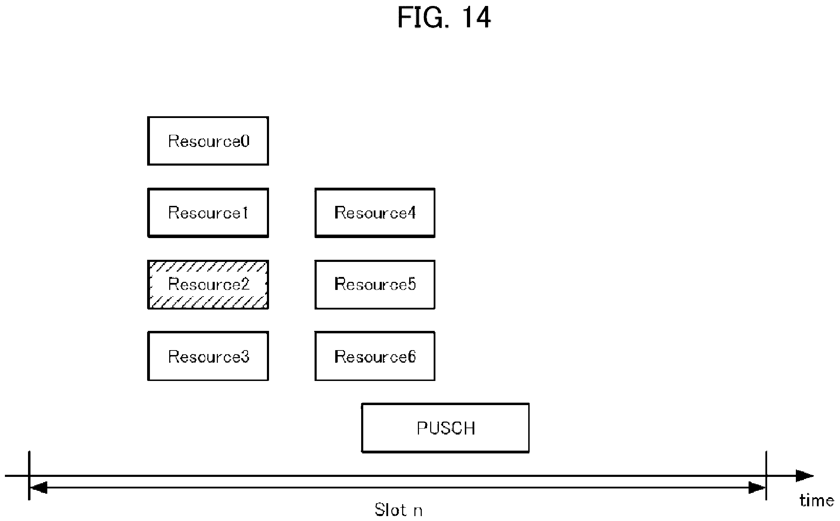

For example, as shown in FIG. 14, since the Unicast PUSCH (which is simply shown as PUSCH in FIG. 14) does not temporally overlap with the actually selected PUCCH resource (resource 2), but temporally overlaps with other PUCCH Resource candidates (resource 4 to resource 6), the UE 200 determines that the specific condition is satisfied.

The operation of the UE 200 in the case that the specific condition is satisfied may be the operation described below. For example, the UE 200 may execute a multiplexing method for the handling method 1 (option 2 described above). Alternatively, the UE 200 may use a multiplexing method related to the handling method 5 described below.

In option 5-5, the UE 200 may execute a process of multiplexing the MBS PUCCH and the Unicast PUSCH when group-common PDSCH is successfully received/decoded and there is an opportunity to transmit a HARQ-ACK. In other words, the UE 200 may determine that there is a temporal overlap occurring between MBS PUCCH and the Unicast PUSCH/PUCCH when the specific condition is satisfied, even if the NACK-only feedback need not be transmitted. Such a process may be applied to any of the options 5-1 to 5-4 described above.

### (5.5) Handling method 5

As described above, the handling method 5 is a method of bundling two or more NACK-only feedbacks (HARQ-ACK bits). When the handling method 5 is applied, the UE 200 determines based on a specific condition whether the MBS PUCCH temporally overlaps with the Unicast PUSCH/PUCCH.

Whether the handling method 5 is applied may be predefined in the radio communication network 10 and may be implicitly or explicitly designated by at least one of an RRC message, a MAC CE message and DCI. The designation may be read as setting, updating, indicating, activating, deactivating, and the like.

First, the specific condition is a condition for determining, based on the MBS PUCCH after bundling two or more NACK-only feedbacks, whether the MBS PUCCH after bundling temporally overlaps with the Unicast PUSCH/PUCCH. That is, the UE 200 determines that the specific condition is satisfied when the MBS PUCCH after bundling temporally overlaps with the Unicast PUSCH/PUCCH.

The operation of the UE 200 in the case that the specific condition is satisfied may be the operation described below. For example, the UE 200 may execute a multiplexing method for the handling method 1 (option 2 described above).

Second, the specific condition is a condition that determines, based on the MBS PUCCH before bundling two or more NACK-only feedbacks, whether at least one of the MBS PUCCHs before bundling temporally overlaps with the Unicast PUSCH/PUCCH. That is, the UE 200 determines that the specific condition is satisfied if at least one of the MBS PUCCHs before bundling temporally overlaps with the Unicast PUSCH/PUCCH.

The operation of the UE 200 in the case that the specific condition is satisfied may be the operation described below. For example, the UE 200 may execute a multiplexing method for handling method 1 (option 2 described above).

In such a case, the UE 200 may execute the process of multiplexing the MBS PUCCH on the Unicast PUSCH when the group-common PDSCH is successfully received/decoded and there is an opportunity to transmit the HARQ-ACK. In other words, the UE 200 may determine that there is a temporal overlap occurring between the MBS PUCCH and the Unicast PUSCH/PUCCH when a specified condition is satisfied, even if it is not necessary to transmit the NACK-only feedback.

### (6) Operation/Effect

In the embodiment, the UE 200 determines a processing method of the MBS PUCCH and the Unicast PUSCH in accordance with the handling method related to the NACK-only feedback when the MBS PUCCH temporally overlaps with the Unicast PUSCH. With this configuration, the operation of the UE 200 in accordance with the handling method related to the NACK-only feedback is clarified, and a common understanding can be obtained between the gNB 100 and the UE 200 for the operation of the UE 200. Therefore, multiplexing of the MBS PUCCH and Unicast PUSCH can be properly operated.

In the embodiment, even if the UE 200 does not need to transmit the NACK-only feedback, it may determine that there is a temporal overlap occurring between the MBS PUCCH and the Unicast PUSCH/PUCCH if the predetermined condition is satisfied. With this configuration, regardless of a decoding result of the group-common PDSCH, a common understanding of the operation of the UE 200 can be obtained between the gNB 100 and the UE 200. Therefore, multiplexing of the MBS PUCCH and the Unicast PUSCH can be properly operated.

### (7) Other Embodiments

Although the contents of the present invention have been described in accordance with the above embodiments, it is obvious to those skilled in the art that the present invention is not limited to these descriptions but various modifications and improvements are possible.

Although not specifically mentioned in the foregoing disclosure, drop may mean that if there are two channels and one of the channels is dropped, the other channel is transmitted.

Although not specifically mentioned in the foregoing disclosure, each of the options described above may be predefined in the radio communication network 10 and may be designated implicitly or explicitly by at least one of the RRC message, MAC CE message and DCI. The designation may be read as setting, updating, indicating, activating, deactivating, and the like.

In the foregoing disclosure, the Unicast PUSCH is primarily illustrated as a second uplink channel temporally overlapping with the MBS PUCCH. However, the foregoing disclosure is not limited thereto. The second uplink channel may be a Unicast PUCCH. Further, temporal overlapping of a plurality of channels may be overlapping in a given unit of time, which may mean, for example, that at least one symbol is the same, or that plurality of channels are scheduled in the same unit of time (for example, slot).

Although not specifically mentioned in the foregoing disclosure, in the MBS, PDSCH (unicast) and PDSCH (multicast) may be multiplexed in time division. PDSCH (unicast) may be referred to as TDMed PDSCH (unicast), and PDSCH (multicast) may be referred to as TDMed PDSCH (multicast). The MBS may support frequency division multiplexing of TDMed PDSCH (unicast) and DMed PDSCH (multicast), and may support frequency division multiplexing of TDMed PDSCH (multicast).

The block diagram (FIGS. 4 and 5) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

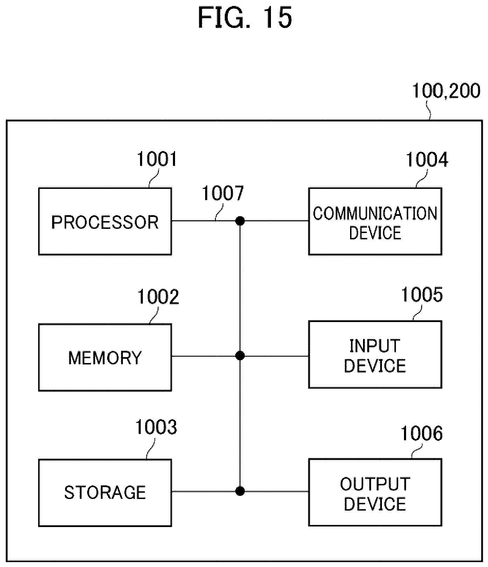

Further, the above-described gNB 100 and UE 200 (the device) may function as a computer that performs processing of a radio communication method of the present disclosure. FIG. 15 is a diagram illustrating an example of a hardware configuration of the device. As illustrated in FIG. 15, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIG. 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type) . At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station may have the function of the mobile station.

A radio frame may be composed of one or more frames in the time domain. Each of the one or more frames in the time domain may be referred to as a subframe.

A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a subcarrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

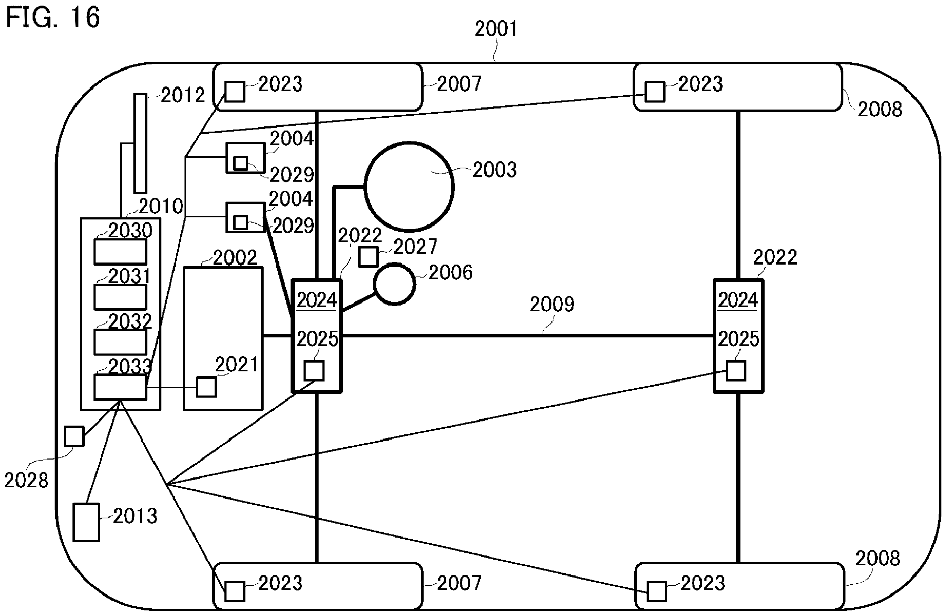

FIG. 16 shows a configuration example of a vehicle 2001. As shown in Figure 16, the vehicle 2001 includes a drive 2002, a steering 2003, an accelerator pedal 2004, a brake pedal 2005, a shift lever 2006, left and right front wheels 2007, left and right rear wheels 2008, an axle 2009, an electronic controller 2010, various sensors 2021 to 2029, an information service unit 2012, and a communication module 2013.

Examples of the drive 2002 include, an engine, a motor, and a hybrid of an engine and a motor.

The steering 2003 includes at least a steering wheel (also called a handle) and steers at least one of the front and rear wheels based on an operation of a steering wheel operated by a user.

The electronic controller 2010 includes a microprocessor 2031, a memory (ROM, RAM) 2032, and a communication port (IO port) 2033. The electronic controller 2010 receives signals from various sensors 2021 to 2027 provided in the vehicle. The electronic controller 2010 may be called an ECU (Electronic Control Unit).

The signals from the various sensors 2021 to 2028 include a current signal from a current sensor 2021 for sensing current of a motor, a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 includes various devices such as a car navigation system, an audio system, a speaker, a television, and a radio for providing various information such as driving information, traffic information, and entertainment information, and one or more ECUs for controlling these devices. The information service unit 2012 provides various multimedia information and multimedia services to an occupant of the vehicle 1 by using information acquired from an external device through a communication module 2013 and the like.

A driver support system unit 2030 comprises various devices such as a millimeter wave radar, a light detection and ranging (LiDAR), a camera, a positioning locator (for example, GNSS), map information (for example, high-definition (HD) maps, autonomous vehicle (AV) maps, and the like), a gyroscopic system (for example, an inertial measurement unit (IMU), an inertial navigation system (INS), and the like), an artificial intelligence (AI) chip, and an AI processor for providing functions to prevent accidents or reduce a driving load of a driver, and one or more ECUs for controlling these devices. Further, the driver support system unit 2030 transmits and receives various kinds of information through the communication module 2013 to realize a driver support function or an automatic driving function.

The communication module 2013 can communicate with the microprocessor 2031 and components of the vehicle 1 through a communication port. For example, the communication module 2013 transmits and receives data through the communication port 2033 to and from the drive 2002, steering 2003, accelerator pedal 2004, brake pedal 2005, shift lever 2006, left and right front wheels 2007, left and right rear wheels 2008, axle 2009, microprocessor 2031 in the electronic control 2010, memory (ROM, RAM) 2032, and sensor 2021 to 2028.

The communication module 2013 is a communication device that can be controlled by the microprocessor 2031 of the electronic controller 2010 and can communicate with an external device. For example, The communication module 2013 transmits and receives various kinds of information via radio communication with the external device. The communication module 2013 may be placed inside or outside the electronic control unit 2010. Examples of the external device may include a base station, a mobile station, and the like.

The communication module 2013 transmits a current signal coming from a current sensor and input to the electronic controller 2010 to an external device via radio communication. Further, the communication module 2013 transmits a rotation speed signal of a front wheel and a rear wheel acquired by the speed sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic controller 2010 to an external device via radio communication.

The communication module 2013 receives various information (traffic information, signal information, inter-vehicle information, and the like.) transmitted from the external device and displays on the information service unit 2012 provided in the vehicle. Further, the communication module 2013 stores various information received from the external device in a memory 2032 usable by the microprocessor 2031. Based on the information stored in the memory 2032, the microprocessor 2031 may control the drive 2002, the steering 2003, the accelerator pedal 2004, the brake pedal 2005, the shift lever 2006, the left and right front wheels 2007, the left and right rear wheels 2008, the axle 2009, the sensors 2021 to 2028, and the like. provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 Radio communication system
20 NG-RAN
100 gNB
110 Reception unit
120 Transmission unit
130 Control unit
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Axel pedal
2005 Brake pedal
2006 Shift lever
2007 Left and right front wheels
2008 Left and right rear wheels
2009 Axles
2010 Electronic control unit
2012 Information service unit
2013 Communication module
2021 Current sensor
2022 Rotational speed sensor
2023 Air pressure sensor
2024 Vehicle speed sensor
2025 Acceleration sensor
2026 Brake pedal sensor
2027 Shift lever sensor
2028 Object detection sensor
2029 Axel pedal sensor
2030 Operation support system unit
2031 Microprocessor
2032 Memory (ROM, RAM)
2033 Communication port

## Claims

1. A terminal comprising:
a reception unit that receives data via a downlink channel in data distribution for a plurality of terminals,
a transmission unit that transmits feedback on the data, and
a control unit that controls the feedback,
wherein the feedback comprises a first feedback in a mode for transmitting a negative response without transmitting an affirmative response, and
wherein, when a first uplink channel related to the first feedback temporally overlaps with a second uplink channel different from the first uplink channel, the control unit determines a processing method of the first uplink channel and the second uplink channel in accordance with a handling method related to the first feedback.

2. The terminal according to claim 1,
wherein the feedback includes a second feedback in a form of transmitting the affirmative response and the negative response, and
wherein the control unit determines a processing method of the first uplink channel and the second uplink channel depending on whether a method of converting the first feedback to the second feedback is applied as the handling method.

3. The terminal according to claim 1, wherein the control unit determines, based on a specified condition, whether the two or more first uplink channels overlap with the second uplink channels when a method supporting transmission of the two or more first uplink channels related to the two or more first feedbacks in a specified time is applied as the handling method.

4. The terminal according to claim 1, wherein the control unit determines, based on a specified condition, whether the first uplink channels overlap with the second uplink channels when a method for associating a combination of the first feedback with a specified sequence or a specified resource related to the first uplink channels is applied as the handling method.

5. The terminal according to claim 1, wherein the control unit determines, based on a specified condition, whether the first uplink channels overlap with the second uplink channels when a method for bundling two or more first feedbacks is applied as the handling method.

6. A radio communication method comprising:
a step A of receiving data via a downlink channel in data distribution for a plurality of terminals and
a step B of transmitting feedback on the data, the feedback including first feedback in a mode for transmitting a negative response without transmitting an affirmative response, and
a step C of determining a processing method of the first uplink channel and the second uplink channel in accordance with a handling method related to the first feedback when the first uplink channel related to the first feedback temporally overlaps with a second uplink channel different from the first uplink channel.
